# EUROPEAN PATENT SPECIFICATION

(11) **EP 2 085 323 B1**
(45) Date of publication and mention of the grant of the patent: **23.03.2016**
(21) Application number: 09150018.1
(22) Date of filing: 02.01.2009
(51) Int. Cl.: B65D 75/58, B65B 61/02, B65B 61/18, B65B 9/20

(54) **Method and apparatus for laser scored packaging**
Verfahren und Vorrichtung für eine lasergeritzte Verpackung
Procédé et appareil pour le conditionnement rayé au laser

(30) Priority: 04.01.2008 US 969680
(43) Date of publication of application: 05.08.2009
(73) Proprietor: Intercontinental Great Brands LLC, East Hanover, NJ 07936 (US)
(72) Inventor: Doll, Paul, Madison WI 53719 (US)
(74) Representative: Smaggasgale, Gillian Helen

(56) References cited:
- EP-A- 0 596 747
- WO-A-03/022691
- JP-A- H08 198 320
- JP-A- 2001 106 240
- US-A1- 2005 123 724

## Description

### Related Application(s)

This application is a continuation-in-part of co-pending and co-owned U.S. patent application number 11/742,754, entitled Ingredient Package and Method and filed May 1,2007, which is incorporated by reference in its entirety herein.

### Technical Field

This invention relates generally to packaging and more particularly to easy-open foodstuff packaging.

### Background

Various packaging methods and types are known in the art. Considerations for commercial packaging include protection of the package's contents and usability of the package by a consumer or user of the package's contents. In the case of packaged food items, for example, the items generally are sealed into a package to optimize shelf life. When a consumer purchases the product, the consumer must then open the package to access the items stored therein. Accessing the items through a sealed package, however, can require sometimes excessive effort to open the package.

In certain packages, such as stick-pack packages, it is also advantageous to easily, completely remove an end of the package to allow the contents to be fully poured out. For example, where the contents of a package are intended to be poured into a solution for mixing, such as in a flavored drink product, the package should be sealed to protect the contents from the outside moisture but also be easily opened by a consumer. Such packages are typically made in a vertical-form-fill-and-seal process wherein a web of material is folded over and sealed. This sealed material is cut and sealed on one end and then filled with the package contents. The second end is then also cut and sealed, thereby sealing the contents of the package therein. To open the package, a user must either pull apart the seal or otherwise cut or tear the package.

Various features have been added to such packages to assist the consumer in opening the package. By one approach, the side of the package is cut to provide the consumer with a starting point in tearing open the package. This approach, however, requires that the package be sealed around the cut portion which takes additional manufacturing resources and efforts. By another known approach, the side edge of the package is flawed by a physical micro-abrasion process that weakens the side of the package such that the package tears more easily on the edge when a user applies a tearing force to open the package. Under this approach and the above cutting approach, however, the package will merely tear along weak areas naturally present in the package material such that the tear may not propagate straight across the package. Moreover, the tear typically stops at the seal running the length of the package without undue additional force applied by the user.

Another known method for assisting the opening of a package includes weakening the package material along a given line such that a tear will likely propagate along that line when opening the package. One such method includes ablating the package material with a laser. The laser damages the package material along a line across the material without cutting entirely through the package material. Thus, when a user tears at the package, the package is more likely to tear along the laser-damaged portion. When a package is scored by a laser all the way across the package, however, the package is too often so weakened that it cannot stay intact during its manufacturing process or during normal handling by a user before the package is intended to be opened.

It is known to laser score a pattern into a package material to provide additional strength for a load carrying package, such as a bag of soil or similar relatively heavy material. Previous disclosures teach a ratio of the length of laser scored to non-scored material along a tear line for such an application to be about one to two; in other words, the laser will score a line of about one half the length of intermediate non-scored material between each scored portion. Having the increased amount of non-scored portions relative to the scored portions provides increased material strength for such load carrying bags, but for smaller foodstuff packaging, such a ratio of laser scoring typically will not satisfactorily carry a tear line cleanly and consistently straight across a package or ensure that laser scoring will be present on the package and seal edges to provide an increased ease of starting a tear and propagating a tear across a package seal.

EP596747 discloses an easy open package comprising at least one wall of a multi-layer flexible packaging film which includes an inner layer and an outer layer and a plurality of rows of linearly extending, laterally spaced slits formed in one layer thereof, extending parallel to and inwardly adjacent a side edge.

US2005/123724 discloses a process for producing at least one scored line in at least one plastic outer layer of a film. This may be achieved using a device including a bearing surface for the film and at least one projection for forming the scored line by penetration of the projection into the plastic layer when the film is in position against the said bearing surface. The projections may be arranged in the form of ribs on one or more coaxial rollers. The projections may form the scored line by ultrasonic plastic flow, the film being compressed between a sonotrode and the rollers.

WO03/022691 discloses a system and method for producing a partially perforated tear line on a substrate material using a high energy beam to ablate the substrate material at a depth less than full depth of the substrate. By varying the output energy level of the high energy beam for varying time intervals, a substrate material is weakened to provide an easy open feature without significantly reducing the tensile strength of the substrate material. The ratio of partial perforated to unablated substrate material may vary according to almost any ratio.

Document JP-A-2001106240, which is regarded as the closest prior art, discloses a package from which the package of claim 1 differs by the dimensions and the thickness of the ablation portions.

### Brief Description of the Drawings

The above needs are at least partially met through provision of the method and apparatus for laser scored packaging described in the following detailed description, particularly when studied in conjunction with the drawings.

According to a first aspect of the present invention there is provided a package formed via a vertical-form-fill-and-seal process comprising: a web material having at least two layers with a first edge portion and a second edge portion opposite the first edge portion sealed together in a seal forming a tubular package with a first sealed end at a first end of the seal and a second sealed end at a second end of the seal; wherein the tubular package comprises a first package side edge and a second package side edge wherein the first package side edge and the second package side edge comprise folded web material; an ablation pattern extending across an outer surface of the web material between the first edge portion and the second edge portion wherein the ablation pattern comprises a series of ablated portions about 1 millimeter to about 3 millimeters in length separated by non-ablated portions about 0.25 millimeters to about 0.75 millimeters in length such that the ablation pattern defines a tear line across the package having ablation portions on the seal and at least one of the first package side edge and the second package side edge such that the package substantially tears along the tear line and across the seal in response to a separating force is being applied by a user at the at least one of the first package side edge or the second package side edge to completely separate one of the first sealed end and the second sealed end from the package; and wherein the ablation pattern is configured so that the ablated portions have a depth less than a thickness of an outer layer of the web material such that the web material maintains sufficient tensile strength to withstand the vertical-form-fill-and seal process substantially without breaking.

According to a second aspect of the present invention there is provided a method of manufacturing a package comprising: laser scoring an ablation pattern across a web material having at least two layers between a first edge portion and a second edge portion of the web material wherein the ablation pattern comprises a series of ablated portions about I millimeter to about 3 millimeters in length separated by non-ablated portions about 0.25 millimeters to about 0.75 millimeters in length; feeding the web material into a vertical-form-fill-and-seal-process device; sealing the web material along a vertical direction to form at least one seal to form a tubular package having a first package side edge and a second package side edge, such that the ablation pattern has ablation portions on the seal and at least one of the first package side edge and the second package side edge; advancing the web material within the vertical-form-fill-and-seal process device; sealing and cutting the web material horizontally across the at least one seal at a first end of the package; cutting the web material at a second end of the package with the ablation pattern between the first end and the second end; wherein the ablation pattern is configured so that the ablated portions have a depth less than a thickness of an outer layer of the web material such that the web material has sufficient tensile strength to withstand the vertical-form-fill-and-seal process substantially without breaking.
FIG. 1 comprises a plan view of a web material for use in creating a package as configured in accordance with various embodiments of the invention;
FIG. 2 comprises a bottom plan view of package as configured in accordance with various embodiments of the invention;
FIG. 3 comprises a top plan view of a portion of a package as configured in accordance with various embodiments of the invention;
FIG. 4 comprises a top plan view of the portion of a package of FIG. 3 while a tearing force is applied by a user to an edge of the package;
FIG. 5 comprises a side view of a package as configured in accordance with various embodiments of the invention with an end completely removed such that the contents can be fully emptied;
FIG. 6 comprises a perspective view of a three layer web material as configured in accordance with various embodiments of the invention;
FIG. 7 comprises an elevation view of a three layer web material along a cross-section along an ablation pattern as configured in accordance with various embodiments of the invention;
FIG. 8 comprises a perspective view of a two layer web material as configured in accordance with various embodiments of the invention;
FIG. 9 comprises an elevation view of a two layer web material along a cross-section along an ablation pattern as configured in accordance with various embodiments of the invention;
FIG. 10 comprises a perspective view of a web material to be formed into a package having a fin-type seal as configured in accordance with various embodiments of the invention;
FIG. 11 comprises a perspective view of a package having a fin-type seal as configured in accordance with various embodiments of the invention;
FIG. 12 comprises a perspective view of a web material to be formed into a package having an overlap seal as configured in accordance with various embodiments of the invention;
FIG. 13 comprises a perspective view of a package having an overlap seal as configured in accordance with various embodiments of the invention;
FIG. 14 comprises a perspective view of a package having two web materials as configured in accordance with various embodiments of the invention;
FIG. 15 comprises a cross-sectional view along line Z-Z of the package of FIG. 14;
FIG. 16 comprises a perspective view of elements of a vertical-form-fill-and-seal device.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above except where different specific meanings have otherwise been set forth herein.

### Detailed Description of the Preferred Embodiments

Generally speaking, pursuant to these various embodiments, a package formed via a vertical-form-fill-and-seal process includes a web material with edge portions sealed to create a vertical sleeve. The web material also includes a first sealed end and a second sealed end at either end of the vertical sleeve to create a sealed package. The package includes a laser scribed ablation pattern extending across the web material with ablated portions having an about one millimeter to about three millimeters length separated by non-ablated portions of about 0.25 millimeter to about 0.75 millimeter length. The package typically has a vertical length of about 75 millimeters to about 200 millimeters.

So configured, the package provides a sealed container that a user may open along the package's ablation pattern. The package may contain foodstuffs such as drink powders, dessert powders, snack nuts, condiments, and toppings that are poured into another container or directly into a consumer's mouth. The laser ablation pattern, having a dash score length of about one millimeter to about three millimeters and a space between scores of about 0.25 millimeters to about 0.75 millimeters, provides the web material with increased tensile strength so as to avoid breaking during the conventional vertical-form-fill-and-seal process, but also provides a high likelihood that an outer edge of the package includes an ablated portion to provide a user an easy-to-start tear area to open the package. Similarly, this pattern provides a high likelihood that an edge of the vertical seal has an ablated portion such that the tearing of the package more easily propagates across the seal. Also, the short spaces between the ablated portions increase the likelihood that the tear will propagate in a line along the ablation pattern, all the way across the package, so that the end of the package is relatively easily and completely removed to allow unrestricted access to the package's contents.

In other words, a longer dash or continuous line for the ablation pattern will excessively weaken the web material, and a shorter dash will make the web material more difficult to open. A longer space between ablated portions will likely allow the tear to move away from the score line, and a shorter space between ablated portions will reduce the tensile strength to mimic a solid score. As such, a dash pattern in accordance with the teachings of this disclosure provides a preferred combination of features for such packages.

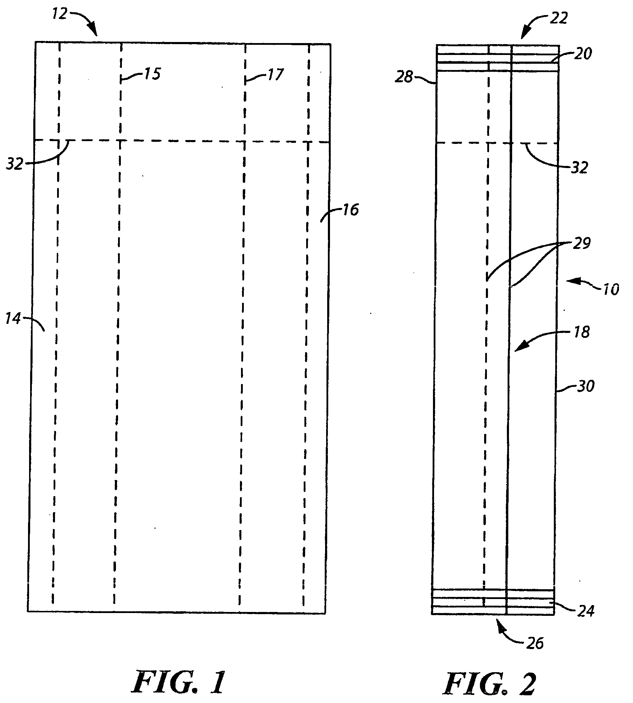

These and other benefits may become clearer upon making a thorough review and study of the following detailed description. Referring now to the drawings, and in particular to FIGS. 1 and 2, an example package that is compatible with many of these teachings will now be presented. A package 10 formed via a vertical-form-fill-and-seal process includes a web material 12 with a first edge portion 14 and a second edge portion 16 opposite the first edge portion 14 that are sealed together in a seal 18. The package 10 includes a first sealed end 20 at a first end 22 of the seal 16 and a second sealed end 24 at a second end of the seal 16. Any of the above described seals may be made by conventional methods, including, for example, the application of heat and pressure to create a laminate seal. With these seals, the contents of the package 10 are protected from outside elements such as moisture and/or oxygen that may affect the quality of the contents.

The first sealed end 20 and the second sealed end 24 define a first package side edge 28 and a second package side edge 30 wherein the first package side edge 28 and the second package side edge 30 are folded web material created by and between the edges of the sealed ends 20 and 24. The folded web material may be creased along fold lines 15 and 17 to better define the side edges for the user or may be rounded portions of the web material transitioning from the front of the package 10 to the back.

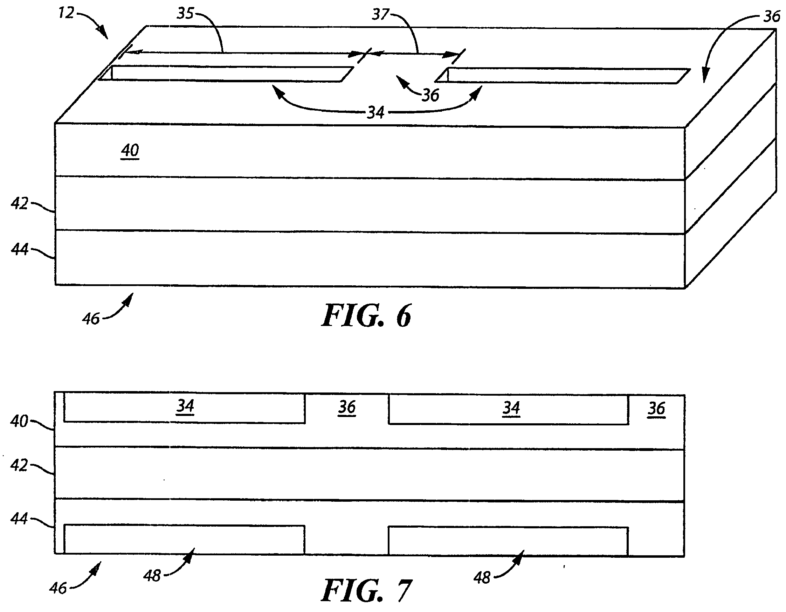

With continuing reference to FIGS. 1, 2, and 3, the package 10 also includes an ablation pattern 32 extending across the web material 12 between the first edge portion 14 and the second edge portion 16. The ablation pattern 32 includes a series of ablated portions 34 about one to about three millimeters in length (designated, for example, by line 35 in FIG. 6) separated by non-ablated portions 36 about 0.25 to about 0.75 millimeters in length (designated, for example, by line 37 in FIG. 6) such that the ablation pattern defines a tear line 39 across the package 10.

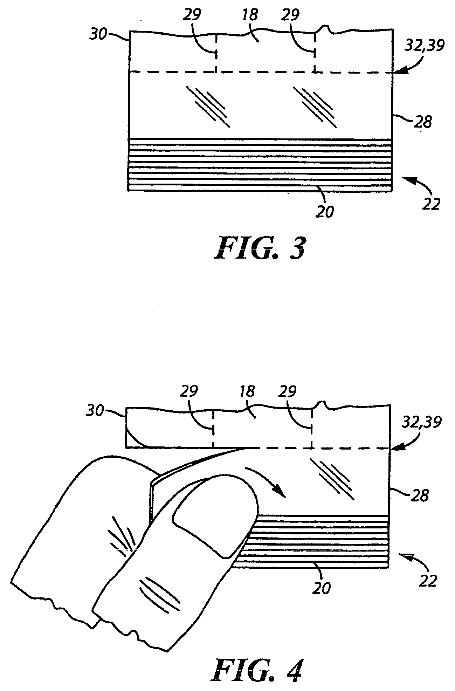

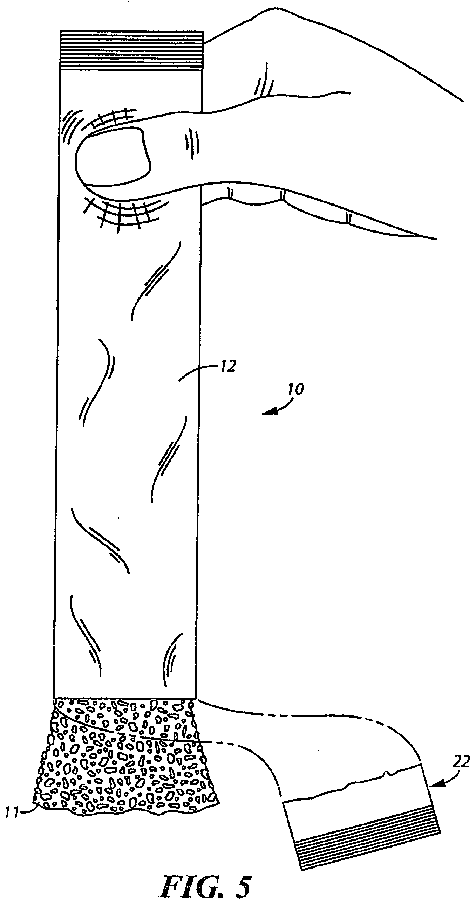

With such an ablation pattern, the package 10 substantially tears along the along tear line 39 and across the seal 18 without varying from the tear line 39 when a separating force is applied by a user at the first package side edge 28 or the second package side edge 30 as shown in FIGS. 3 and 4. The range of ablation portion lengths and non-ablated portion lengths taught herein also increases the likelihood that the first package side edge 28, the second package side edge 30, and an edge 29 of the seal 18 have ablated portions 34, thereby improving the ease at which the package 10 begins tearing and continues tearing through the seal 18 without a substantial increase in tearing force applied by the user. So configured, the user may more easily remove the entire package end to release the package contents 11 as illustrated in FIG. 5. Moreover, the web material 12 maintains sufficient tensile strength via the non-ablated portions 36 to withstand the vertical-form-fill-and-seal process substantially without breaking.

With reference to FIGS. 6 through 9, the web material 12 and ablation patterns 32 are further discussed. The web material 12 includes at least two layers. A multi-layer web, material 12 includes at least an outer layer 40 comprising at least one of a group including PET (polyethylene terephthalate) and OPP (oriented polypropylene film). The outer layer 40 will typically include branding and product information. A second layer 42 includes at least one of a group comprising PET, OPP, and foil, typcially including sealant for a two layer structure. An optional third layer 44 may operate as a sealant layer typically comprising primarily PE (polyethylene) or other material suitable for contacting the package's contents 11 and providing adequate seal characteristics as generally known in the art with the second layer acting as a barrier. Any one or more of the layers may also be metalized to increase the protection of the package's contents 11.

Typically, the ablated portions 34 are scribed with carbon dioxide lasers during the manufacturing of the web material 12 and prior to the vertical-form-fill-and-seal manufacturing process, although the ablated portions 34 may be scribed during the vertical-form-fill-and-seal process. Other types of lasers may be used to create the ablated portions 34.

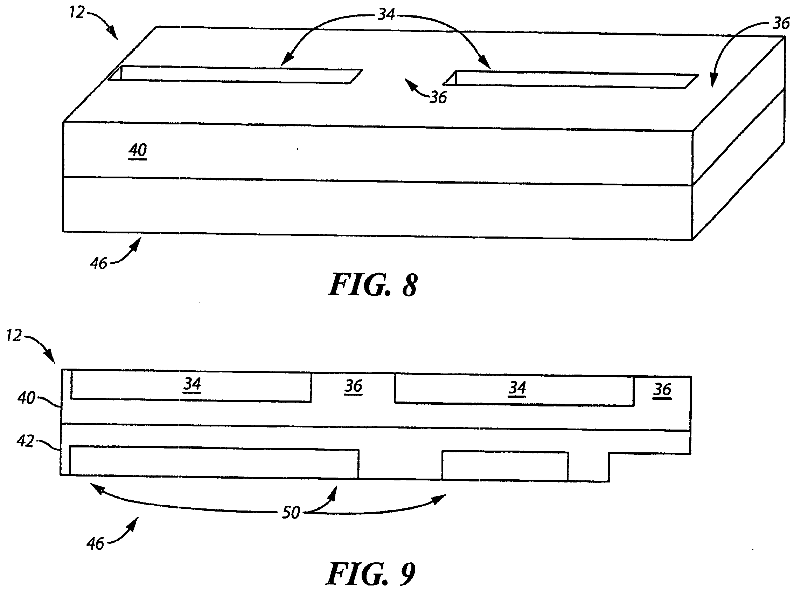

In a typical approach for the laser scribing, as shown in FIGS. 7 and 9, the ablated portions 34 have a depth less than a thickness of an outer layer 40 of the package 10. This depth maintains the integrity of the package seal and strength of the web material 12. Although the ablation pattern 32 is generally shown herein as a uniform pattern, the ablation pattern 32 may have a non-uniform pattern 50 within the length ranges for the ablated and non-ablated portions as taught herein.

By another approach, a second ablation pattern 48 may be disposed on a web material side 46 opposite and substantially in line with the first ablation pattern 32. Additionally, various approaches to the laser scoring placement are possible, including, for example, a single ablation pattern on an outer portion of the package 10, a single ablation pattern on an inner portion of the package 10, single ablation patterns substantially in line with each other on the outside and inside portions of the package 10, double ablation patterns on the inside and/or outside portions of the package, and so forth.

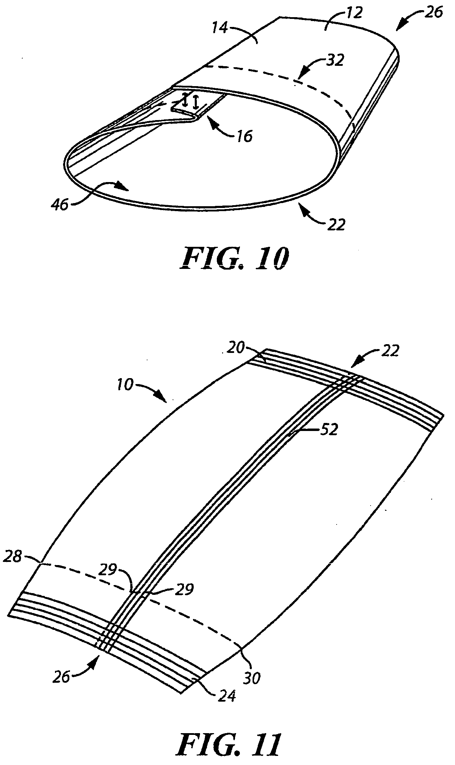

Referring now to FIGS. 10 through 13, the seal 18 of the first edge portion 14 to the second edge portion 16 of the web material 12 may include any type of seal known in the art but will typically comprise a fin-type seal 52 or an overlap seal 62. Such seals are known in the art, but will be described briefly for clarity. With reference to FIGS. 10 and 11, a fin-type seal 52 is formed by folding the web material 12 such that the inner portions 46 of the first edge portion 14 and second edge portion 16 touch. These edge portions are sealed together and folded against the package 10, thereby creating a "fin." When the ablation pattern 32 extends across the whole web material 12, the ablation pattern 32 creates a line of weakness across the fin-type seal 52 thereby rending the seal more easily torn. When the ablation pattern 32 is configured according to the teachings of this disclosure, an ablated portion 34 is more likely positioned on an edge 29 of the fin-type seal 52 to help the propagation of the tear to continue across the seal 52.

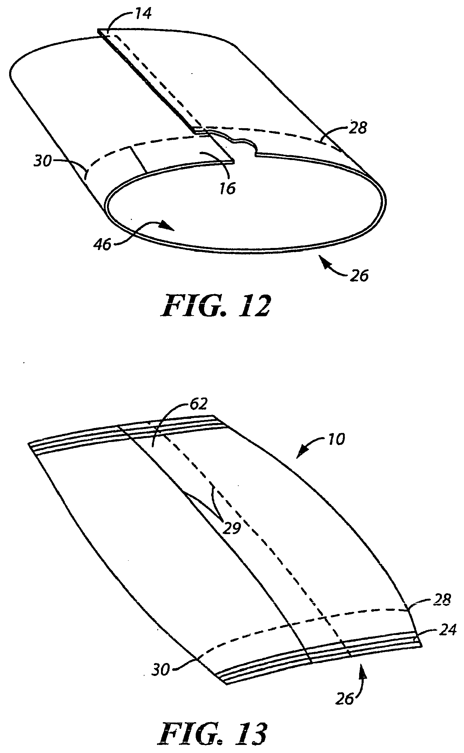

With reference to FIGS. 12 and 13, an overlap seal 62 is formed by folding the web material 12 such that one of either the first edge portion 14 and second edge portion 16 overlaps the other. FIG. 12, for example, shows the first edge portion 14 overlapping with the second edge portion 16. These edge portions are then sealed together, eliminating a need for a folded portion like the fin-type seal 52. When the ablation pattern 32 extends across the whole web material 12, the ablation pattern 32 creates a line of weakness across the overlap seal 62 thereby rending the seal more easily torn. When the ablation pattern 32 is configured according to the teachings of this disclosure, an ablated portion 34 is more likely positioned on an edge 29 of the fin-type seal 62 to help the propagation of the tear to continue across the seal 62.

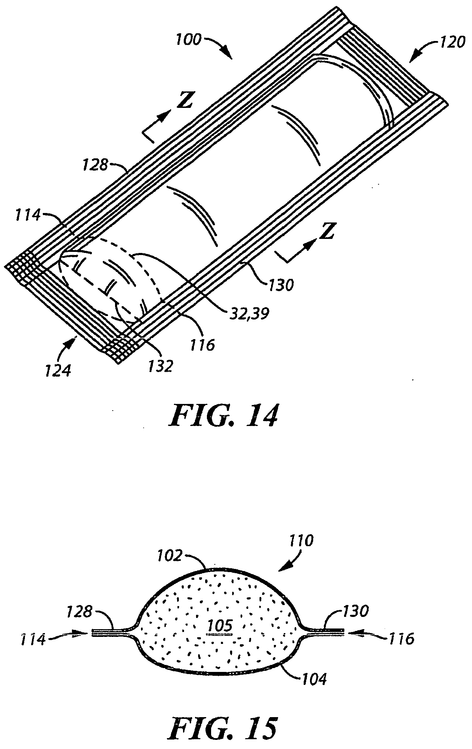

By a different approach, and with reference to FIGS. 14 and 15, a package 100 may include two web materials 102 and 104 sealed together to define an interior space 105. By one method, the first web material 102 is sealed to the second web material 104 at a first side edge 114 along a first side edge seal 128 and at a second side edge 116 along a second side edge seal 130. The package 100 also includes a first sealed end 120 and a second sealed end 124 sealing the package 100 between the first side edge seal 128 and the second side edge seal 130. An ablation pattern 32 as described above extends across at least the first web material 102 between the first side edge 114 and the second side edge 116 such that the ablation pattern 32 defines a tear line 39 across the package 100. So configured, the first side edge seal 114 and the second side edge seal 116 have a high likelihood of having ablated portions 34, the package 100 substantially tears along the along tear line 39 and across the first side edge seal 128 and the second side edge seal 130 when a separating force is applied by a user at the first side edge 114 or the second side edge 116. The web materials 102 and 104 also maintain sufficient tensile strength to withstand the vertical-form-fill-and-seal process substantially without breaking.

It is possible to have a second ablation pattern 132 extending across the second web material 104 between the first side edge 114 and the second side edge 116 substantially in line with the ablation pattern 32 on the first web material 102. Other configurations of ablation patterns are possible and considered within the scope of this disclosure.

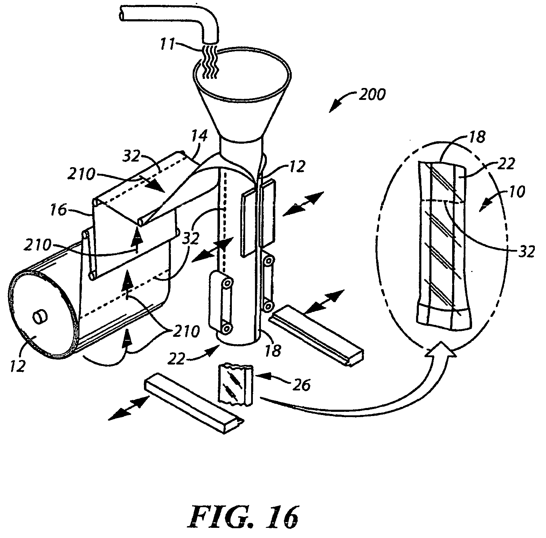

With reference to FIG. 16, a method for manufacturing a package 10 according to the teachings of this disclosure will be described. The method includes laser scoring an ablation pattern 32 across a web material 12 between a first edge portion 14 and a second edge portion 16 of the web material 12 and (as generally indicated by reference number 210) feeding the web material 12 into a vertical-form-fill-and-seal-process device 200. As depicted in FIG. 16, the ablation pattern 32 was laser scored during the manufacture of the web material 12 and prior to its feeding into the vertical-form-fill-and-seal-process device 200. By another approach, lasers may be incorporated into the vertical-form-fill-and-seal-process device 200 such that the ablation pattern 32 may be added after feeding the web material 12 into the vertical-form-fill-and-seal-process device 200. By yet another approach, the laser scoring may ablate the web material 12 on two sides of the web material 12 and substantially in line with the ablation patterns on either side of the material. The web material 12 is then sealed along a vertical direction to form at least one seal 18, and advanced within the vertical-form-fill-and-seal-process device 200. The web material 12 is sealed and cut horizontally across the at least one seal 18 at a first end 22 of the package 10. The web material 12 is then cut at a second end 26 of the package 10 with the ablation pattern 32 between the first end 22 and the second end 26. Typically, the second cut severs the web material 12 such that the length from the first end 22 to the second end 26 is about 75 millimeters to about 200 millimeters.

Although the vertical-form-fill-and-seal-process device 200 depicted in FIG. 16 is designed to create a fin-type seal, the above described method can be applied to any of the other package seals described herein, including, for example, an overlap seal package and a dual web material package. For instance, the step of sealing the web material along the vertical direction to form a seal may include sealing the web material 12 to a second web material. In this example, two vertical seals at the vertical edges of the web materials may be created at this step. Similarly, the second web material may be laser scored with a second ablation pattern. Other variations of the laser scoring pattern and sealing process will be recognized by those skilled in the art.

So configured, the package created by such a method and as described herein provides relative ease of starting to open the package when compared to previous methods provided to consumers to help open relatively small web-based packaging. Moreover, the tear more reliably propagates along the tear line and more easily propagates past vertical seals in the packaging. For example, a test was conducted to compare the tear forces needed to be applied over time while propagating a tear through a typical fin-type seal package. The test was conducted as follows. A package with a laser score pattern was fit with taped extensions to mimic the rolling wrist action of a user. The portion of the package below the score line was fixed securely in the test device, while the extension tape affixed to the portion above the score line was secured in the tear tester jaws. The testing device was a Vinatoru seal strength tester. The tester jaws pulled the tape from the opposite side of the package and progressed across the top of the package and upward at a 30 degree angle. The tester jaws were fitted with a force transducer and the instantaneous force was recorded at regular intervals.

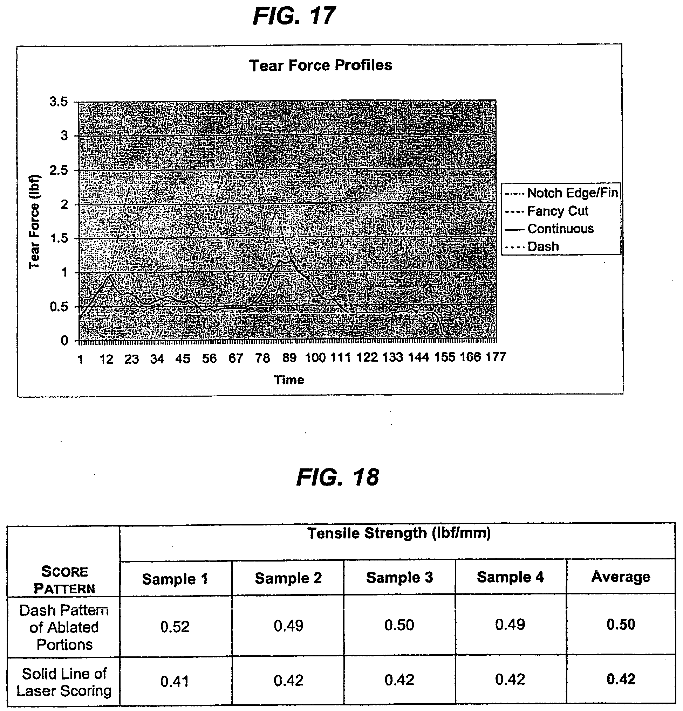

FIG. 17 illustrates the results of the test. The laser scribed, dashed ablation pattern as described herein (labeled "Dash") allows for the package to open with approximately the same force, or ease of opening, as having a continuous laser score line (labeled "Continuous") in the web material. Both of the laser scored packages necessitated substantially less opening force than the notched approach (labeled "Notch Edge/Fin") and the micro-abrasion approach (labeled "Fancy Cut" for the FANCY CUT brand of packaging).

As demonstrated in the table of FIG. 18, however, the dashed ablation pattern has a consistently improved tensile strength over packages having a continuous score line. The data presented in FIG. 18 was collected by measuring the tensile strength of packages using an Instron testing device. The data demonstrates that the ablation pattern has sufficiently improved tensile strength over a continuous score line so as to be less likely to break in a vertical-form-fill-and-seal process while having approximately the same opening force, as shown in FIG. 17.

Those skilled in the art will recognize that a wide variety of modifications, alterations, and combinations can be made with respect to the above described embodiments without departing from the scope of the claims. For example, many of the example embodiments discussed herein refer to generally rectangular shaped packages with specified, distinct edges. Other configurations such as oval or round packages are possible. Also, any variation of multiple scoring lines to provide multiple tear lines in a package can be provided. Such modifications, alterations, and combinations are to be viewed as being within the ambit of the inventive concept.

## Claims

1. A package (10) formed via a vertical-form-fill-and-seal process comprising:
- a web material (12) having at least two layers (40, 42,44) with a first edge portion (14) and a second edge portion (16) opposite the first edge portion (14) sealed together in a seal (18) forming a tubular package with a first sealed end (20) at a first end (22) of the seal (18) and a second sealed end (24) at a second end of the seal (16); wherein the two layers are an outer layer (40) comprising at least one of a group including PET (polyethylene terephthalate) and OPP (oriented polypropylene film), the second layer (42) including at least one of a group comprising PET, OPP, and foil;
- wherein the tubular package comprises a first package side edge (28) and a second package side edge (30) wherein the first package side edge (28) and the second package side (30) edge comprise folded web material (12);
- an ablation pattern (32) extending across an outer surface of the web material between the first edge portion (14) and the second edge (16) portion wherein the ablation pattern (32) comprises a series of ablated portions about 1 millimeter to about 3 millimeters in length separated by non-ablated portions (34) about 0.25 millimeters to about 0.75 millimeters in length such that the ablation pattern (32) defines a tear line across the package having ablation portions (34) on the seal (18) and at least one of the first package side edge (28) and the second package side edge (36) such that the package substantially tears along the tear line and across the seal (18) in response to a separating force is being applied by a user at the at least one of the first package side edge (28) or the second package side edge (30) to completely separate one of the first sealed end (20) and the second sealed end (22) from the package (10); and
- wherein the ablation pattern (32) is configured so that the ablated portions (34) have a depth less than a thickness of an outer layer (40) of the web material (12) such that the web material (12) maintains sufficient tensile strength to withstand the vertical-form-fill-and seal process substantially without breaking.

2. The package (10) of Claim 1, wherein the first package side edge (28), the second package side edge (30), and an edge of the seal have ablated portions (34).

3. The package (10) of Claim 1 or 2, further comprising a second ablation pattern (132) disposed on a web material (12) side opposite and substantially in line with the ablation pattern (32).

4. A method of manufacturing a package (10) comprising:
- laser scoring an ablation pattern (32) across a web material (12) having at least two layers (40, 42, 44) between a first edge portion (14) and a second edge portion (16) of the web material (12) wherein the ablation pattern (32) comprises a series of ablated portions (34) about 1 millimeter to about 3 millimeters in length separated by non-ablated portions about 0.25 millimeters to about 0.75 millimeters in length;
- feeding the web material (12) into a vertical-form-fill-and-seal-process device (200);
- sealing the web material (12) along a vertical direction to form at least one seal (18) to form a tubular package having a first package side edge (28) and a second package side edge, (30) such that the ablation pattern (32) has ablation portions (34) on the seal (18) and at least one of the first package side edge (28) and the second package side edge (30);
- advancing the web material (12) within the vertical-form-fill-and-seal process device;
- sealing and cutting the web material (12) horizontally across the at least one seal (18) at a first end (20) of the package;
- cutting the web material (12) at a second end (24) of the package with the ablation pattern (32) between the first end (20) and the second end (24);
- wherein the ablation pattern (32) is configured so that the ablated portions (34) have a depth less than a thickness of an outer layer (40) of the web material (12) such that the web material (12) has sufficient tensile strength to withstand the vertical-form-fill-and-seal process substantially without breaking.

5. The method of Claim 4, wherein the step of laser scoring an ablation pattern (32) extending across a web material (12) between a first edge portion (14) and a second edge portion (16) of the web material (12) wherein the ablation pattern (32) comprises a series of ablated portions (34) about 1 millimeter to about 3 millimeters in length separated by non-ablated portions about 0.25 millimeters to about 0.75 millimeters in length further comprises ablating the web material (12) on two sides of the web material (12).

6. The method of Claim 4 or 5, wherein the step of laser scoring an ablation pattern (32) extending across a web material (12) between a first edge portion (14) and a second edge (16) portion of the web material (12) is performed after the step of feeding the web material (12) into a vertical-form-fill-and-seal-process device (200).

7. The method of any one of claims 4 to 6, further comprising laser scoring a second ablation pattern (132) disposed on a web material (12) side opposite and substantially in line with the ablation pattern (32).

8. The method of any one of Claims 4 to 7, wherein the step of sealing the web material (12) along a vertical direction to form at least one seal comprises sealing the web material (102) to a second web material (104).

9. The method of Claim 8, further comprising laser scoring a second ablation pattern (132) extending across the second web material (104) wherein the ablation pattern (132) comprises a series of ablated portions about 1 millimeter to about 3 millimeters in length separated by non-ablated portions about 0.25 millimeters to about 0.75 millimeters in length.

## Patentansprüche

1. Verpackung (10) gebildet über ein vertikales Ausformungs-Füllungs-und-Versiegelungs-Verfahren umfassend:
- ein Bahnmaterial (12) mit mindestens zwei Schichten (40, 42, 44) mit einem ersten Randabschnitt (14) und einem zweiten Randabschnitt (16) gegenüberliegend dem ersten Randabschnitt (14) miteinander versiegelt in einem Verschluss (18) eine röhrenförmige Verpackung bildend mit einem ersten versiegelten Ende (20) an einem ersten Ende (22) des Verschlusses (18) und einem zweiten versiegelten Ende (24) an einem zweiten Ende des Verschlusses (16); wobei die beiden Schichten sind eine äußere Schicht (40), umfassend zumindest eines aus einer Gruppe enthaltend PET (Polyethylenterephthalat) und OPP (orientierte Polypropylenfolie), die zweite Schicht (42) enthaltend zumindest eines aus einer Gruppe umfassend PET, OPP und Folie;
- wobei die röhrenförmige Verpackung einen ersten seitlichen Rand (28) der Verpackung und einen zweiten seitlichen Rand (30) der Verpackung umfasst, wobei der erste seitliche Rand (28) der Verpackung und der zweite seitliche Rand (30) der Verpackung gefaltetes Bahnmaterial (12) umfassen;
- ein Ablöseraster (32), sich über die äußere Oberfläche des Bahnmaterials erstreckend zwischen dem ersten Randabschnitt (14) und dem zweiten Randabschnitt (16), wobei das Ablöseraster (32) eine Reihe von abgelösten Abschnitten etwa 1 Millimeter bis etwa 3 Millimeter lang umfasst getrennt durch nicht-abgelöste Abschnitte (34) etwa 0,25 Millimeter bis etwa 0,75 Millimeter lang derart, dass das Ablöseraster (32) eine Aufreißlinie definiert quer durch die Verpackung mit Ablöseabschnitten (34) auf dem Verschluss (18) und zumindest einem von dem ersten seitlichen Rand (28) der Verpackung und dem zweiten seitlichen Rand (36) der Verpackung derart, dass die Verpackung im Wesentlichen entlang der Aufreißlinie und quer durch den Verschluss (18) aufreißt in Antwort auf eine Trennungskraft, die von einem Nutzer an dem zumindest einem von dem ersten seitlichen Rand (28) der Verpackung oder den zweiten seitlichen Rand (30) der Verpackung ausgeübt wird, um vollständig eines von dem ersten versiegelten Ende (20) und dem zweiten versiegelten Ende (22) von der Verpackung (10) abzutrennen;
und
- wobei das Ablöseraster (32) derart konfiguriert ist, dass die abgelösten Abschnitte (34) eine Tiefe haben von weniger als einer Dicke einer äußeren Schicht (40) von dem Bahnmaterial (12) derart, dass das Bahnmaterial (12) ausreichende Zugfestigkeit behält, um dem vertikalen Ausformungs-Füllungs-und-Versiegelungs-Verfahren zu widerstehen im Wesentlichen ohne zu reißen.

2. Verpackung (10) nach Anspruch 1, wobei der erste seitliche Rand (28) der Verpackung, der zweite seitliche Rand (30) der Verpackung und ein Rand des Verschlusses abgelöste Abschnitte (34) aufweisen.

3. Verpackung (10) nach Anspruch 1 oder 2, ferner umfassend ein zweites Ablöseraster (132) angeordnet auf einer Seite vom Bahnmaterial (12) gegenüberliegend und im Wesentlichen in Linie mit dem Ablöseraster (32).

4. Verfahren zur Herstellung einer Verpackung (10) umfassend:
- Laserritzen eines Ablöserasters (32) quer durch ein Bahnmaterial (12) mit mindestens zwei Schichten (40, 42, 44) zwischen einem ersten Randabschnitt (14) und einem zweiten Randabschnitt (16) von dem Bahnmaterial (12), wobei das Ablöseraster (32) eine Reihe von abgelösten Abschnitten (34) etwa 1 Millimeter bis etwa 3 Millimeter lang umfasst getrennt durch nicht-abgelöste Abschnitte etwa 0,25 Millimeter bis etwa 0,75 Millimeter lang;
- Beschicken des Bahnmaterials (12) in eine Vorrichtung (200) für das vertikale Ausformungs-Füllungs-und-Versiegelungs-Verfahren;
- Versiegeln des Bahnmaterials (12) entlang einer vertikalen Richtung um zumindest einen Verschluss (18) zu bilden, um eine röhrenförmige Verpackung zu bilden mit einem ersten seitlichen Rand (28) und einen zweiten seitlichen Rand, (30) derart, dass das Ablöseraster (32) abgelöste Abschnitte (34) auf dem Verschluss (18) aufweist und zumindest einem von dem ersten seitlichen Rand (28) der Verpackung und dem zweiten seitlichen Rand (30) der Verpackung;
- Vorrücken des Bahnmaterials (12) innerhalb der Vorrichtung für das vertikale Ausformungs-Füllungs-und-Versiegelungs-Verfahren;
- Versiegeln und schneiden des Bahnmaterials (12) horizontal quer durch den zumindest einen Verschluss (18) an einem ersten Ende (20) der Verpackung;
- Schneiden des Bahnmaterials (12) an einem zweiten Ende (24) der Verpackung mit dem Ablöseraster (32) zwischen dem ersten Ende (20) und dem zweiten Ende (24);
- wobei das Ablöseraster (32) derart konfiguriert ist, dass die abgelösten Abschnitte (34) eine Tiefe haben, die kleiner ist als die Dicke von einer äußeren Schicht (40) des Bahnmaterials (12) derart, dass das Bahnmaterial (12) genügend Zugfestigkeit aufweist, um dem vertikalen Ausformungs-Füllungs-und-Versiegelungs-Verfahren zu widerstehen im Wesentlichen ohne zu Reißen.

5. Verfahren nach Anspruch 4, wobei der Schritt des Laserritzens eines Ablöserasters (32) ausgedehnt quer über ein Bahnmaterial (12) zwischen einem ersten Randabschnitt (14) und einem zweiten Randabschnitt (12) des Bahnmaterials (12), wobei das Ablöseraster (32) eine Reihe von abgelösten Abschnitten (34) etwa 1 Millimeter bis etwa 3 Millimeter lang umfasst, getrennt durch nicht-abgelöste Abschnitte etwa 0,25 Millimeter bis etwa 0,75 Millimeter lang ferner Ablösen des Bahnmaterials (12) auf zwei Seiten des Bahnmaterials (12) umfasst.

6. Verfahren nach Anspruch 4 oder 5, wobei der Schritt des Laserritzens von einem Ablöseraster (32) ausgebreitet quer über ein Bahnmaterial (12) zwischen einem ersten Randabschnitt (14) und einem zweiten Randabschnitt (16) des Bahnmaterials (12) durchgeführt wird nach dem Schritt der Beschickung des Bahnmaterials (12) in eine Vorrichtung (200) für das vertikale Ausformungs-Füllungs-und-Versiegelungs-Verfahren.

7. Verfahren nach einem der Ansprüche 4 bis 6, ferner umfassend Laserritzen eines zweiten Ablöserasters (132) angeordnet auf einer Seite des Bahnmaterials (12) gegenüberliegend und im Wesentlichen in Linie mit dem Ablöseraster (32).

8. Verfahren nach einem der Ansprüche 4 bis 7, wobei der Schritt des Versiegelns des Bahnmaterials (12) entlang einer vertikalen Richtung, um zumindest einen Verschluss zu bilden das Versiegeln des Bahnmaterials (102) mit einem zweiten Bahnmaterial (104) umfasst.

9. Verfahren nach Anspruch 8, ferner umfassend Laserritzen eines zweiten Ablöserasters (132) ausgebreitet quer über das zweite Bahnmaterial (104), wobei das Ablöseraster (132) eine Reihe von abgelösten Abschnitten etwa 1 Millimeter bis etwa 3 Millimeter lang umfasst, getrennt durch nicht-abgelöste Abschnitte etwa 0,25 Millimeter bis etwa 0,75 Millimeter lang.

## Revendications

1. Emballage (10) formé via un processus de formage, remplissage et scellage vertical comprenant :
- un matériau en bande (12) présentant au moins deux couches (40, 42, 44) avec une première partie de bord (14) et une seconde partie de bord (16) en regard de la première partie de bord (14) scellées ensemble dans un joint (18) formant un emballage tubulaire avec une première extrémité scellée (20) sur une première extrémité (22) du joint (18) et une seconde extrémité scellée (24) sur une seconde extrémité du joint (16) ; dans lequel les deux couches sont une couche extérieure (40) comprenant au moins l'un d'un groupe incluant le PET (téréphtalate de polyéthylène) et l'OPP (film de polypropylène orienté), la seconde couche (42) incluant au moins l'un d'un groupe comprenant le PET, l'OPP et une feuille de métal ;
- dans lequel l'emballage tubulaire comprend un premier bord latéral d'emballage (28) et un second bord latéral d'emballage (30), dans lequel le premier bord latéral d'emballage (28) et le second bord latéral d'emballage (30) comprennent un matériau en bande plié (12) ;
- un motif d'ablation (32) s'étendant sur une surface extérieure du matériau en bande entre la première partie de bord (14) et la seconde partie de bord (16), dans lequel le motif d'ablation (32) comprend une série de parties ablatées d'environ 1 à environ 3 millimètres de longueur séparées par des parties non ablatées (34) d'environ 0,25 à environ 0,75 millimètre de longueur de sorte que le motif d'ablation (32) définisse une ligne de rupture sur l'emballage présentant des parties ablatées (34) sur le joint (18) et au moins l'une du premier bord latéral d'emballage (28) et le second bord latéral d'emballage (36) de sorte que l'emballage se rompe sensiblement le long de la ligne de rupture et sur le joint (18) en réponse à l'application d'une force de séparation par un utilisateur sur l'au moins un du premier bord latéral d'emballage (28) ou du second bord latéral d'emballage (30) pour séparer complètement l'une de la première extrémité scellée (20) et la seconde extrémité scellée (22), de l'emballage (10) ; et
- dans lequel le motif d'ablation (32) est configuré de sorte que les parties ablatées (34) aient une profondeur inférieure à une épaisseur d'une couche extérieure (40) du matériau en bande (12) de sorte que le matériau en bande (12) maintienne une résistance à la traction suffisante pour résister au processus de formage, remplissage et scellage vertical sensiblement sans rupture.

2. Emballage (10) selon la revendication 1, dans lequel le premier bord latéral d'emballage (28), le second bord latéral d'emballage (30) et un bord du joint ont des parties ablatées (34).

3. Emballage (10) selon la revendication 1 ou 2, comprenant en outre un second motif d'ablation (132) agencé sur un côté du matériau en bande (12) en regard et sensiblement en ligne avec le motif ablation (32).

4. Procédé de fabrication d'un emballage (10) comprenant :
- le marquage au laser d'un motif d'ablation (32) sur un matériau en bande (12) présentant au moins deux couches (40, 42, 44) entre une première partie de bord (14) et une seconde partie de bord (16) du matériau en bande (12), dans lequel le motif d'ablation (32) comprend une série de parties ablatées (34) d'environ 1 millimètre à environ 3 millimètres de longueur séparées par des parties non ablatées d'environ 0,25 millimètre à environ 0,75 millimètre de longueur ;
- l'amenée du matériau en bande (12) dans un dispositif de processus de formage, remplissage et scellage vertical (200) ;
- le scellage du matériau en bande (12) le long d'une direction verticale pour former au moins un joint (18) afin de former un emballage tubulaire présentant un premier bord latéral d'emballage (28) et un second bord latéral d'emballage (30) de sorte que le motif d'ablation (32) ait des parties d'ablatées (34) sur le joint (18) et au moins l'un du premier bord latéral d'emballage (28) et du second bord latéral d'emballage (30) ;
- l'avance du matériau en bande (12) dans le dispositif de processus de formage, remplissage et scellage vertical ;
- le scellage et la coupe du matériau en bande (12) horizontalement sur l'au moins un joint (18) sur une première extrémité (20) de l'emballage ;
- la coupe du matériau en bande (12) sur une seconde extrémité (24) de l'emballage avec le motif d'ablation (32) entre la première extrémité (20) et la seconde extrémité (24) ;
- dans lequel le motif d'ablation (32) est configuré de sorte que les parties ablatées (34) aient une profondeur inférieure à une épaisseur d'une couche extérieure (40) du matériau en bande (12) de sorte que le matériau en bande (12) ait une résistance à la traction suffisante pour résister au processus de formage, remplissage et scellage vertical sensiblement sans rupture.

5. Procédé selon la revendication 4, dans lequel l'étape de marquage au laser d'un motif d'ablation (32) s'étendant sur un matériau en bande (12) entre une première partie de bord (14) et une seconde partie de bord (16) du matériau en bande (12), dans lequel le motif d'ablation (32) comprend une série de parties ablatées (34) d'environ 1 millimètre à environ 3 millimètres de longueur séparées par des parties non ablatées d'environ 0,25 millimètre à environ 0,75 millimètre de longueur, comprend en outre l'ablation du matériau en bande (12) sur deux côtés du matériau en bande (12).

6. Procédé selon la revendication 4 ou 5, dans lequel l'étape de marquage au laser d'un motif d'ablation (32) s'étendant sur un matériau en bande (12) entre une première partie de bord (14) et une seconde partie de bord (16) du matériau en bande (12) est réalisée après l'étape d'amenée du matériau en bande (12) dans un dispositif de processus de formage, remplissage et scellage vertical (200).

7. Procédé selon l'une quelconque des revendications 4 à 6, comprenant en outre le marquage au laser d'un second motif d'ablation (132) agencé sur un côté de matériau en bande (12) en regard et sensiblement en ligne avec le motif d'ablation (32).

8. Procédé selon l'une quelconque des revendications 4 à 7, dans lequel l'étape de scellage du matériau en bande (12) le long d'une direction verticale pour former au moins un joint comprend le scellage du matériau en bande (102) sur le second matériau en bande (104).

9. Procédé selon la revendication 8, comprenant en outre le marquage au laser d'un second motif d'ablation (132) s'étendant sur le second matériau en bande (104), dans lequel le motif d'ablation (132) comprend une série de parties ablatées d'environ 1 millimètre à environ 3 millimètres de longueur séparées par des parties non ablatées d'environ 0,25 millimètre à environ 0,75 millimètre de longueur.
